# DEMANDE DE BREVET EUROPEEN

(11) **EP 2 301 801 A1**
(43) Date de publication de la demande: **30.03.2011**
(21) Numéro de dépôt: 10179824.7
(22) Date de dépôt: 27.09.2010
(51) Int. Cl.: B60Q 1/12, B60Q 1/14

(54) **Procédé de commande d'un projecteur d'éclairage pour véhicule**

(30) Priorité: 29.09.2009 FR 0956742
(71) Demandeur: VALEO VISION, 93012 Bobigny (FR)
(72) Inventeur: Robert, Caroline, 75017, PARIS (FR); Bonhoure, Patrick, 74100, ANNEMASSE (FR)

(57) **Abrégé**

Procédé de commande d'un projecteur d'éclairage pour véhicule, ledit projecteur étant doté d'un dispositif de commutation automatique entre des modes d'éclairage route et code et d'une fonction de suivi de courbe (DBL), **Caractérisé en ce qu**'il comporte une étape consistant à faire passer la fonction de suivi de courbe (DBL) d'un premier état, actif, à un deuxième état à la détection d'une combinaison de conditions comprenant un état actif du dispositif de commutation automatique entre des modes d'éclairage route et code et un état actif du mode d'éclairage route.

## Description

L'invention est relative à un projecteur d'éclairage code et virage pour véhicule automobile. L'invention est également relative à un véhicule équipé d'un tel projecteur.

Le domaine de l'invention est, d'une façon générale, celui des projecteurs de véhicules automobiles. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, dont la zone de vision sur la route avoisine 200 mètres, et qui doivent être éteints lorsque l'on croise un autre véhicule afin de ne pas éblouir son conducteur ;
- des projecteurs anti-brouillard ;
- des projecteurs bi-modes, qui cumulent les fonctions de feux de croisement et de feux longue portée.

Cependant, les dispositifs projecteurs classiques qui viennent d'être évoqués, plus particulièrement les feux de route longue portée, produisent des faisceaux lumineux qui sont perfectibles lorsque ces dispositifs projecteurs sont utilisés dans certaines conditions. Ainsi, un conducteur est parfois confronté à des situations dans lesquelles le faisceau lumineux produit par les codes de son véhicule dans leur configuration classique pourrait être orienté, réparti de façon meilleure pour aborder de telles situations ; par configuration classique d'un dispositif de type code, on désigne la configuration dans laquelle ils se trouvent lorsqu'ils ne présentent pas de fonctions avancées, dont certains exemples vont être mentionnés ultérieurement.

Par exemple, lorsqu'un véhicule aborde un virage, les projecteurs continuent à éclairer droit devant eux alors qu'il serait plus judicieux d'orienter le faisceau lumineux dans la direction du virage emprunté.

A cet effet, en complément des fonctions projecteurs principales classiques, notamment codes et routes, différents perfectionnements sont progressivement apparus. On a ainsi vu se développer des fonctions élaborées, ou fonctions avancées, parmi lesquelles on trouve notamment les projecteurs à éclairage tournant DBL (Dynamic Bending Light) encore ici appelé projecteurs à fonction de suivi de courbe, qui permettent de modifier l'orientation d'un faisceau lumineux produit par une source lumineuse, de telle sorte que lorsque le véhicule aborde un virage, la route soit éclairée de façon optimale.

Par projecteurs tournants on désigne notamment des projecteurs configurés pour être capable de tourner.

D'un autre côté, le véhicule est aussi doté d'un système de détection d'obstacles. Il peut s'agir d'une projection de motif, ou d'une extraction d'objet dans une image d'un système à caméra permettant la détection des phares de voiture arrivant en face.

Si le véhicule est équipé d'un dispositif de commutation automatique entre les modes d'éclairage route et code, et si le mode d'éclairage route est dans un état actif, la caméra a une seconde fonction : Désactiver le mode d'éclairage route lorsqu'une voiture est détectée sur la route pour ne pas éblouir le conducteur.

Les systèmes de commutation automatique entre les modes d'éclairage route et code utilisent une caméra avec un champ de vue et une position fixes. De ce fait, dans certaines situations, le véhicule croisant peut ne pas apparaitre dans le champ de vue de la camera et donc ne pas être détecté et pour autant être déjà dans le faisceau route du véhicule équipé de la commutation automatique code 1 route. Il en découle une situation d'éblouissement potentiel du conducteur du véhicule croisant. Ce phénomène peut être aggravé par la présence sur le véhicule d'une fonction de suivi de courbe DBL.

Lorsque la fonction de suivi de courbe DBL est dans un état par défaut, le faisceau de la caméra et celui des projecteurs couvrent essentiellement le même champ. Par un état par défaut, on désigne la configuration dans laquelle se trouvent les projecteurs lorsqu'aucune courbure de route n'est détectée. Evidemment, si la fonction DBL fait tourner les faisceaux route des projecteurs en conséquence d'une courbure détectée, le faisceau de la caméra, qui est fixe et toujours parallèle au sens de déplacement du véhicule, et le faisceau tournant des projecteurs, divergent l'un de l'autre, risquant d'éblouir les conducteurs des véhicules croisant, puisque la caméra peut ne pas détecter certains obstacles.

Par ailleurs, il faut fournir un système d'éclairage pour un véhicule, équipé de la commutation automatique code 1 route et de projecteurs à faisceau tournant, qui ne risque pas d'éblouir les conducteurs des voitures croisant quand une courbure de route est détectée.

La présente invention a pour but de répondre au problème qui vient d'être mentionné.

L'invention concerne donc essentiellement un procédé de commande d'au moins un faisceau d'un projecteur d'éclairage pour véhicule, ledit véhicule étant doté d'un dispositif de commutation automatique entre des modes d'éclairage route et code et d'une fonction de suivi de courbe DBL, **caractérisé en ce qu'**il comporte une étape consistant à faire passer la fonction de suivi de courbe DBL d'un premier état, actif, à au moins un deuxième état à la détection d'une combinaison de conditions comprenant un état actif du dispositif de commutation automatique entre des modes d'éclairage route et code et un état actif du mode d'éclairage route.

Le premier état de la fonction de suivi de courbe DBL, est avantageusement un état par défaut. Par un état par défaut, on désigne une configuration dans laquelle se trouve systématiquement la fonction de suivi de courbe DBL sauf si une commande contraire s'y oppose.

Par ailleurs, le premier état dans lequel la fonction DBL est active, peut répondre aux lois de suivi de courbe habituellement utilisées pour un système DBL. Le premier état est ainsi un état standard.

Le deuxième état de la fonction de suivi de courbe DBL, peut être un état actif différent du premier état ou un état inactif.

La combinaison de conditions peut comporter un angle de volant. La combinaison de conditions peut aussi comporter une détection d'un virage d'une amplitude supérieure à une valeur prédéterminée.

La valeur du rayon de courbure peut être déduite de la valeur de l'angle au volant. Cette valeur et son signe (virage à droite/ virage à gauche) est classiquement directement lue sur le CAN (Controller Area Network) du véhicule. La valeur et son signe sont différents selon les véhicules.

On peut aussi connaître la valeur du rayon de courbure du virage grâce à une cartographie GPS. Cette dernière contient les informations de la géométrie de la route.

Il est enfin possible de coupler les informations en provenance de la cartographie GPS et du CAN véhicule (angle au volant) pour anticiper un virage (utilisation cartographie) et confirmer l'information ensuite (angle au volant).

On peut accorder une plus grande confiance à la valeur du rayon de courbure si les deux sources d'information sont utilisées simultanément.

De préférence mais pas nécessairement, l'invention traite des virages ayant un rayon de courbure inférieur à 54m, ce qui correspond à une vitesse de sécurité de 50km/h .

De préférence, notamment lorsqu'un virage serré est détecté, les éclairages code et route sont allumés et, en même temps, la fonction de suivi de courbe est activée.

L'invention concerne également un système d'éclairage de route comprenant :
- Un projecteur comprenant une fonction de suivi de courbe DBL pour éclairer la route dans les virages,
- Un microcontrôleur étant relié à un réseau de données du véhicule et contrôlant l'orientation dudit projecteur,
- Une caméra apte à délivrer une information de détection d'obstacles à minima, détection de véhicules « croisants et suivis » et placée à l'avant du véhicule,
- Un dispositif de commutation automatique entre des modes d'éclairage route et code recevant des informations de la caméra,
la fonction de suivi de courbe (DBL) comportant des moyens de commande configurés pour la faire passer d'un premier état, actif, à un deuxième état à la détection d'une combinaison de conditions comprenant un état actif du dispositif de commutation automatique entre des modes d'éclairage route et code et un état actif du mode d'éclairage route.

L'invention concerne également un procédé de commande de deux projecteur d'éclairage pour véhicule, lesdits projecteurs étant dotés d'un dispositif de commutation automatique entre des modes d'éclairage route et code et d'une fonction de suivi de courbe (DBL), comportant une étape consistant à faire passer la fonction de suivi de courbe (DBL) d'un premier état, actif, à au moins un deuxième état à la détection d'une combinaison de conditions comprenant un état actif du dispositif de commutation automatique entre des modes d'éclairage route et code et un état actif du mode d'éclairage route, et ledit deuxième état est défini par la rotation du faisceau d'un premier projecteur d'un premier angle et par la rotation du faisceau du deuxième projecteur d'un deuxième angle différent du premier angle.

L'invention concerne également un procédé de commande de deux projecteur d'éclairage pour véhicule, lesdits projecteurs étant dotés d'un dispositif de commutation automatique entre des modes d'éclairage route et code et d'une fonction de suivi de courbe (DBL), comportant une étape consistant à faire passer la fonction de suivi de courbe (DBL) d'un premier état, actif, à au moins un deuxième état à la détection d'une combinaison de conditions comprenant un état actif du dispositif de commutation automatique entre des modes d'éclairage route et code et un état actif du mode d'éclairage route, et ledit deuxième état est défini par la rotation du faisceau du premier projecteur et l'absence de rotation du faisceau du deuxième projecteur.

L'invention et ses différentes applications seront mieux comprises à la lecture de la description qui suit et à l'examen des figures qui l'accompagne. Celles-ci ne sont présentées qu'à titre indicatif et nullement limitatif de l'invention.
La figure 1, représente schématiquement un véhicule doté d'une caméra de détection d'obstacles sans la fonction DBL (1a) et avec la fonction DBL (1b);
La figure 2 représente un diagramme d'un premier mode de réalisation non limitatif selon l'invention.
La figure 3 représente un diagramme d'un deuxième mode de réalisation non limitatif selon l'invention.
La figure 4 représente un diagramme d'un troisième mode de réalisation non limitatif selon l'invention.
La figure 5 représente un tableau qui à titre d'exemple non limitatif résume différents modes de réalisation selon l'invention.

Comme on va le voir en détail ci-après, le procédé selon l'invention va permettre d'éviter à un conducteur d'un véhicule croisant (c'est-à-dire qui se déplace en sens inverse du véhicule considéré), d'être ébloui par les projecteurs du véhicule considéré.

Le véhicule croisant peut être de toute nature. L'invention s'applique également à d'autres obstacles tels des piétons.

Par véhicule automobile, on entend tout véhicule comprenant un moteur.

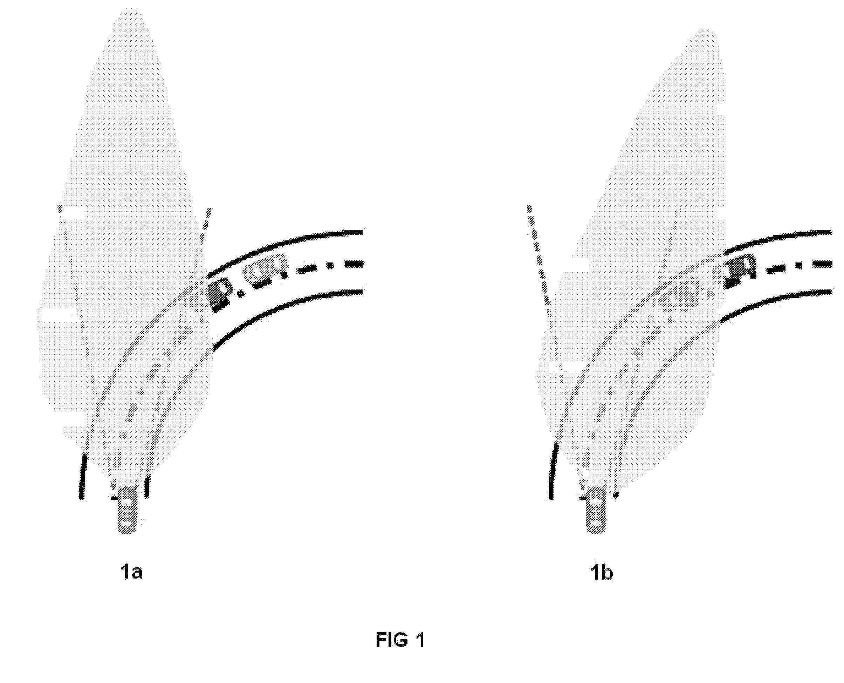

Sur la figure 1a on voit un véhicule automobile équipé d'un système de commutation automatique entre les deux modes d'éclairage code et route. Ces systèmes utilisent une caméra avec un champ de vue fixe limité sur la figure 1a par des lignes pointillés. La caméra est fixe.

Le véhicule équipé d'un dispositif de commutation automatique entre les modes d'éclairage route et code, ayant le mode d'éclairage route dans un état actif, désactive alors le mode d'éclairage route lorsqu'une voiture est détectée dans le champ de la caméra pour ne pas éblouir le conducteur du véhicule croisant.

Puisque la caméra a un champ de vue et une position fixes, le véhicule croisant peut ne pas apparaître dans le champ de vue de la caméra, notamment dans les virages, et donc ne pas être détecté et pour autant être déjà dans le faisceau route du véhicule équipé de la commutation automatique code / route. Il en découle une situation d'éblouissement potentiel du conducteur du véhicule croisant comme illustré sur la figure 1a.

Les faisceaux des projecteurs de la voiture illustrée sur la figure 1a ne sont pas tournants ; les projecteurs ne possèdent donc pas la fonction avancée suivi de courbe DBL.

Le véhicule illustré sur la figure 1b est cependant équipé de projecteurs à faisceaux tournants encore appelé fonction suivi de route DBL. Ledit véhicule est également muni du système de commutation automatique entre les modes d'éclairage code et route, et de la caméra de détection d'obstacles qui envoie des signaux audit système de commutation à la détection d'une obstacle (véhicule croisant), afin de passer du mode route, si ce dernier est actif, au mode code.

Dans un virage ou une courbure de route, la fonction DBL étant active, fait tourner les projecteurs en suivant la courbe. Le résultat est une situation d'éblouissement du conducteur du véhicule croisant. Cet éblouissement illustré sur la figure 1b est beaucoup plus grave que celui de la figure 1a puisque le champ du faisceau route des projecteurs est plus décalé du champ de vue de la caméra fixe, ainsi le conducteur se trouvera plus longtemps dans le faisceau éblouissant avant de se retrouver dans le champ de vue de la caméra (et l'on sait par ailleurs que l'éblouissement est directement lié à la durée pendant laquelle le sujet est soumis au rayonnement optique). Par ailleurs, le conducteur potentiellement ébloui se trouve plus proche de l'axe des faisceaux, l'éclairement perçu est donc plus important, l'intensité lumineuse émise croissant en direction du centre du faisceau.

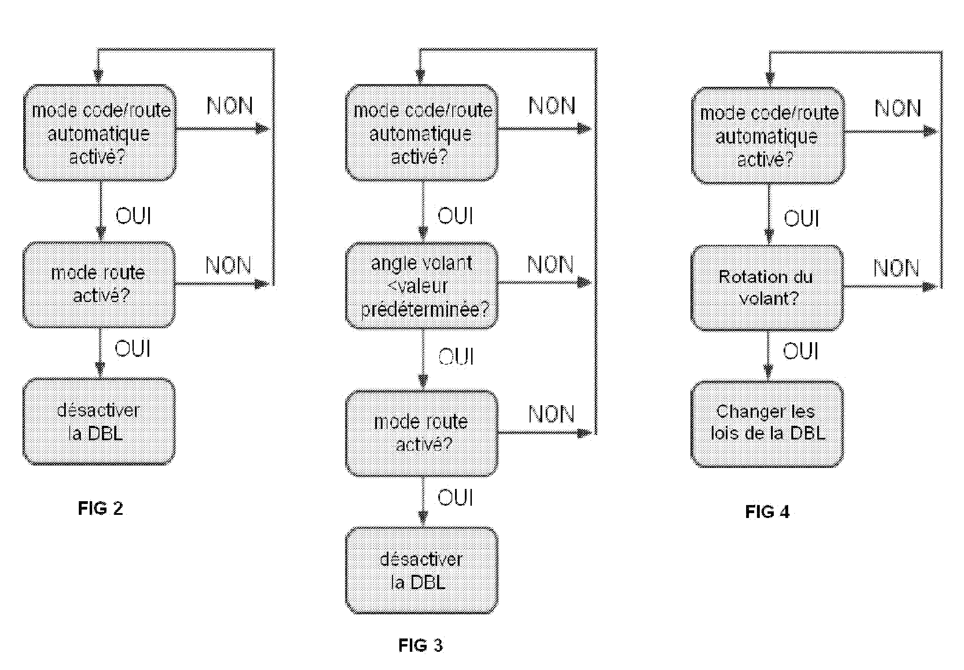

Pour résoudre le problème, selon un premier mode de réalisation illustré sur la figure 2, la fonction suivi de courbe DBL est désactivée quand le système de commutation automatique entre les modes d'éclairage route et code est actif et que les projecteurs sont en mode route.

Ainsi on évite les éblouissements intempestifs tout en gardant la qualité de l'éclairage en mode code avec l'utilisation de la fonction de suivi de courbe DBL.

Puisque la fonction DBL est brusquement désactivée et que le mode route est actif grâce au système de commutation automatique entre les modes d'éclairage route et code, le premier mode de réalisation n'est pas fonction des niveaux de courbure des virages et une détection de virage n'est pas nécessaire..

Selon un deuxième mode de réalisation illustré sur la figure 3, la fonction de suivi de courbe DBL est uniquement désactivée pour certains virages. Ceci est réalisé en se référant à titre d'exemple à l'angle au volant ou à un système de navigation.

Ainsi la fonction de suivi de courbe DBL est désactivée quand le système de commutation automatique entre les modes d'éclairage route et code est actif, le mode route est activé et l'angle au volant est supérieur à une valeur déterminée.

Dans un exemple, cette valeur prédéterminée équivaut à un rayon de courbure de 60 m.

Le rayon de courbure est de manière générale calculé à partir des informations d'angles de volant et /ou par les informations données par le système de navigation.

La fonction de suivi de courbe DBL peut également être désactivée quand le système de commutation automatique entre les modes d'éclairage route et code est actif, le mode route est activé et la courbure d'un virage selon le système de navigation est supérieure à une valeur prédéterminée.

Selon un troisième mode de réalisation illustré sur la figure 4, les règles de la fonction de suivi de courbe DBL sont modifiées lors des passages automatiques du mode d'éclairage code au mode d'éclairage route.

Ainsi, si le système de commutation automatique entre les modes d'éclairage route et code est actif et le mode route est activé, au lieu de désactiver la fonction DBL dans les virages mesurés en fonction de par exemple la rotation du volant, certains lois de contrôle de la fonction DBL sont modifiées.

Par exemple, si le véhicule est en mode route en détectant un virage, la rotation d'un des deux projecteurs est simplement limitée angulairement, pour obtenir un faisceau plus large qu'un faisceau en mode route tout en réduisant la luminosité totale. Bien que le faisceau reste toujours potentiellement éblouissant, l'impact du faisceau est limité en cas de véhicule croisant, tandis que le confort de conduite est augmenté puisqu'on élargit le faisceau par la rotation d'un seul projecteur ou la limitation de la rotation de l'autre projecteur.

La rotation du faisceau du projecteur est par exemple liée au rayon du cercle osculateur de la courbure de la route. Elle est calculée à partir des informations d'angles de volant et /ou par les informations données par le système de navigation.

Si seul un faisceau de projecteur doit tourner dans le dernier état, son choix est lié au sens de la courbure.

Alternativement, les deux faisceaux peuvent être tournants mais d'un angle différent l'un de l'autre. Ainsi les risques d'éblouissement potentiels pour les véhicules croisant sont diminués.

Dans un autre mode de réalisation, si le système de commutation automatique entre les modes d'éclairage route et code est actif et le mode route est activé, la fonction DBL peut être désactivée à la détection d'une combinaison de certaines conditions et modifiée à la détection d'une combinaison d'autres conditions.

Dans un autre mode de réalisation, si le système de commutation automatique entre les modes d'éclairage route et code est actif et le mode route est activé, les lois de la fonction DBL peut être modifiée à la détection d'une combinaison de certaines conditions et modifiée différemment à la détection d'une combinaison d'autres conditions.

Ainsi, on peut définir plusieurs deuxièmes états correspondant à plusieurs combinaisons de conditions.

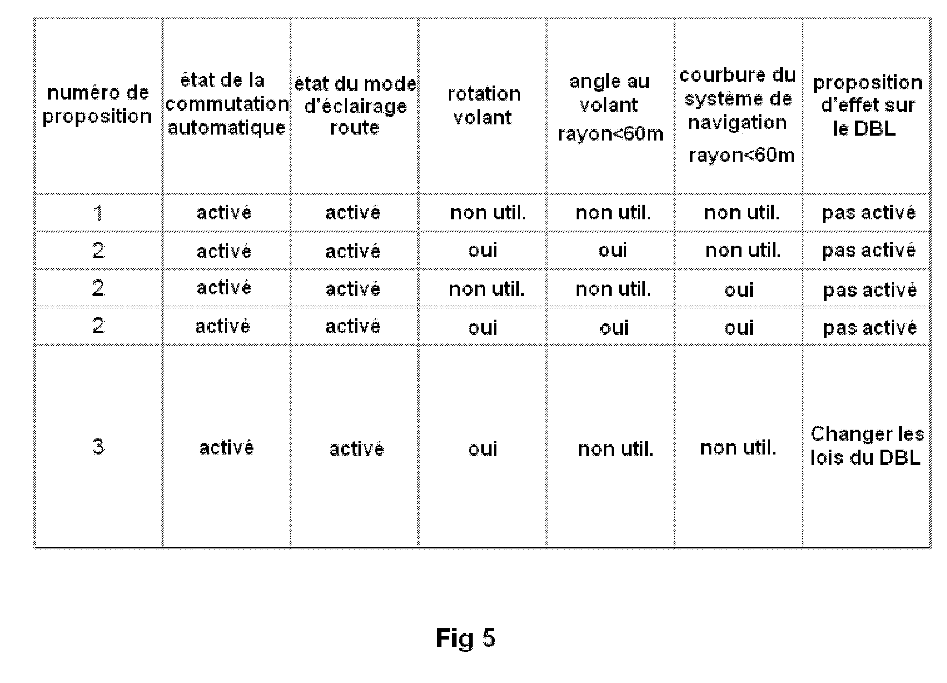

La figure 5 montre un tableau qui résume différents modes de réalisation selon l'invention. La première ligne selon un premier mode de réalisation, montre que la fonction suivi de courbe DBL est désactivée quand le système de commutation automatique entre les modes d'éclairage route et code est actif et que les projecteurs sont en mode route (état du mode d'éclairage route activé). Par la mention « *non util.* » il est indiqué que le paramètre n'est pas utilisé pour ce cas.

Dans la deuxième à la quatrième ligne selon un deuxième mode de réalisation, le système de commutation automatique entre les modes d'éclairage route et code est actif et les projecteurs sont en mode route. Les trois paramètres, rotation volant, angle du volant et système de navigation, peuvent être pris en compte individuellement ou tous les trois à la fois afin de désactiver le la fonction de suivi de courbe DBL.

La cinquième ligne selon un troisième mode de réalisation montre que les lois de la fonction suivi de courbe DBL sont changées quand le système de commutation automatique entre les modes d'éclairage route et code est actif et que les projecteurs sont en mode route (état de l'appel de phare activé).

## Revendications

1. Procédé de commande d'au moins un projecteur d'éclairage pour véhicule, ledit projecteur étant doté d'un dispositif de commutation automatique entre des modes d'éclairage route et code et d'une fonction de suivi de courbe (DBL),
**caractérisé en ce qu'**il comporte une étape consistant à faire passer la fonction de suivi de courbe (DBL) d'un premier état, actif, à au moins un deuxième état à la détection d'une combinaison de conditions comprenant un état actif du dispositif de commutation automatique entre des modes d'éclairage route et code et un état actif du mode d'éclairage route.

2. Procédé de commande d'au moins un projecteur d'éclairage selon la revendication 1, **caractérisé en ce que** ledit premier état de la fonction de suivi de courbe DBL, est un état par défaut.

3. Procédé de commande d'au moins un projecteur d'éclairage selon les revendications 1 ou 2, **caractérisé en ce que** ledit deuxième état de la fonction de suivi de courbe DBL, est un état inactif.

4. Procédé de commande d'au moins un projecteur d'éclairage selon les revendications 1 ou 2, **caractérisé en ce que** ledit deuxième état de la fonction de suivi de courbe DBL, est un état actif différent du premier état.

5. Procédé de commande d'au moins un projecteur d'éclairage selon l'une quelconque des revendications 1 à 4 **caractérisé en ce que** la combinaison de conditions comporte un angle de volant.

6. Procédé de commande d'au moins un projecteur d'éclairage selon l'une quelconque des revendications 1 à 5 **caractérisé en ce que** la combinaison de conditions comporte une détection d'un virage d'une amplitude supérieure à une valeur prédéterminée.

7. Un système d'éclairage de route comprenant :
- au moins un projecteur comprenant une fonction de suivi de courbe DBL pour éclairer la route dans les virages,
- un microcontrôleur étant relié au réseau de données du véhicule et contrôlant l'orientation dudit projecteur,
- une caméra apte à délivrer une information de détection d'obstacles placée à l'avant du véhicule,
- un dispositif de commutation automatique entre des modes d'éclairage route et code recevant des informations de la caméra,
**caractérisé en ce que** la fonction de suivi de courbe (DBL) comporte des moyens de commande configurés pour la faire passer d'un premier état, actif, à au moins un deuxième état à la détection d'une combinaison de conditions comprenant un état actif du dispositif de commutation automatique entre des modes d'éclairage route et code et un état actif du mode d'éclairage route.

8. Un système d'éclairage de route selon la revendication 7, **caractérisé en ce que** ledit premier état de la fonction de suivi de courbe DBL, est un état par défaut.

9. Un système d'éclairage de route selon les revendications 7 ou 8, **caractérisé en ce que** ledit deuxième état de la fonction de suivi de courbe DBL, est un état inactif.

10. Un système d'éclairage de route selon les revendications 7 ou 8, **caractérisé en ce que** ledit deuxième état de la fonction de suivi de courbe DBL, est un état actif différent du premier état.

11. Un système d'éclairage de route selon l'une quelconque des revendications 7 à 10, **caractérisé en ce que** la combinaison de conditions comporte un angle de volant.

12. Un système d'éclairage de route selon l'une quelconque des revendications 7 à 11, **caractérisé en ce que** la combinaison de conditions comporte une détection d'un virage d'une amplitude supérieure à une valeur prédéterminée.

13. Un système d'éclairage de route selon l'une quelconque des revendications 7 à 12, **caractérisé en ce qu'**il comprend deux projecteurs et **en ce que** ledit deuxième état est défini par la rotation du faisceau d'un premier projecteur d'un premier angle et par la rotation du faisceau du deuxième projecteur d'un deuxième angle différent du premier angle.

14. Un système d'éclairage de route selon l'une quelconque des revendications 7 à 12, **caractérisé en ce qu'**il comprend deux projecteurs et **en ce que** ledit deuxième état est défini par la rotation du faisceau du premier projecteur et l'absence de rotation du faisceau du deuxième projecteur.
